# EUROPEAN PATENT APPLICATION

(11) **EP 4 742 143 A2**
(43) Date of publication of application: **13.05.2026**
(21) Application number: 26168965.7
(22) Date of filing: 30.03.2026
(51) Int. Cl.: G06Q 50/40, G08G 1/0968, G06Q 10/047, G01C 21/36, G06F 40/30

(54) **METHOD AND APPARATUS FOR TRAVEL PLANNING BASED ON INTELLIGENT DRIVING SYSTEM, AND ELECTRONIC DEVICE**

(30) Priority: 11.06.2025 CN 202510776553
(71) Applicant: XG TECH PTE. LTD., Singapore 179098 (SG)
(72) Inventor: LIN, Dingwei, 179098 Singapore (SG); HU, Wenxiao, 179098 Singapore (SG)
(74) Representative: Dehns Germany Partnerschaft mbB

(57) **Abstract**

Embodiments of the present disclosure relate to the field of intelligent driving technologies, and provide a method and an apparatus for travel planning based on an intelligent driving system, and an electronic device. The method includes: acquiring a first speech of a user; determining, based on the first speech, at least one travel requirement of the user for a current travel; determining at least one travel task to be planned for the current travel based on the at least one travel requirement; determining at least one to-be-planned matter included in the travel task; and planning the at least one to-be-planned matter included in the travel task to obtain a planning result for the corresponding travel task.

## Description

### TECHNICAL FIELD

The present disclosure relates to the field of intelligent driving technologies, and in particular, to a method and an apparatus for travel planning based on an intelligent driving system, and an electronic device.

### BACKGROUND

An intelligent driving system is a system for achieving intelligent driving of a vehicle. The intelligent driving system may provide a travel planning function to assist users in travel planning when the users are driving or riding in the vehicle.

When providing the travel planning function for a user, the intelligent driving system requires multiple rounds of interaction with the user. In each round of interaction, the intelligent driving system may acquire a speech command from the user. The speech command indicates a to-be-planned matter for the current travel, or includes instruction information for accomplishing planning of the to-be-planned matter. Accordingly, based on a plurality of rounds of speech commands from the user, the intelligent driving system can meet a travel requirement of the user for the current travel by planning the to-be-planned matter. In other words, the user needs to proactively determine the to-be-planned matter for the current travel based on the travel requirement to be met for the current travel, and assists the intelligent driving system in accomplishing the planning of the to-be-planned matter, while the intelligent driving system only needs to passively plan the to-be-planned matter instructed by the user to accomplish the travel planning.

### SUMMARY

A current intelligent driving system can only perform travel planning based on a speech command from a user for each to-be-planned matter. However, in this method, the user is required to explicitly indicate a specific to-be-planned matter, and travel planning is completed step by step through multiple rounds of interaction, resulting in a complex process and poor user experience.

In view of the above technical problem, the present disclosure provides a method and an apparatus for travel planning based on an intelligent driving system, and an electronic device, to resolve the problem of the cumbersome planning process caused by the current intelligent driving system requiring a user to proactively determine a to-be-planned matter and deliver an instruction.

According to a first aspect of the present disclosure, there is provided a method for travel planning based on an intelligent driving system, the method including: acquiring a first speech of a user; determining, based on the first speech, at least one travel requirement of the user for a current travel; determining at least one travel task to be planned for the current travel based on the at least one travel requirement; determining at least one to-be-planned matter included in the travel task; and planning the at least one to-be-planned matter included in the travel task to obtain a planning result for the corresponding travel task.

According to a second aspect of the present disclosure, there is provided an apparatus for travel planning based on an intelligent driving system, the apparatus including: an interaction module, configured for acquiring a first speech of a user; a policy module, configured for determining, based on the first speech, at least one travel requirement of the user for a current travel, the policy module being further configured for determining at least one travel task to be planned for the current travel based on the at least one travel requirement, and the policy module being further configured for determining at least one to-be-planned matter included in the travel task; and a planning module, configured for planning the at least one to-be-planned matter included in the travel task to obtain a planning result for the corresponding travel task.

According to a third aspect of the present disclosure, an embodiment of the present disclosure provides a computer readable storage medium, on which a computer program is stored, where the computer program is used for performing the method for travel planning based on an intelligent driving system according to the first aspect.

According to a fourth aspect of the present disclosure, an embodiment of the present disclosure provides an electronic device, including: a processor; and a memory, configured for storing instructions executable by the processor, where the processor is configured for reading the executable instructions from the memory, and executing the executable instructions to implement the method for travel planning based on an intelligent driving system according to the first aspect.

Based on the method for travel planning based on an intelligent driving system provided in the present disclosure, a first speech of a user is acquired to understand a travel intention of the user, and at least one travel requirement of the user for a current travel is determined based on the travel intention. Then, based on the at least one travel requirement, at least one travel task to be planned for the current travel and at least one to-be-planned matter included in each travel task are determined automatically. Finally, each to-be-planned matter is planned to obtain a planning result for a corresponding travel task. In this process, the user only needs to give a single complex instruction (that is, the first speech) containing multiple travel requirements, without needing to indicate each to-be-planned matter one by one. Therefore, operational steps can be simplified for the user. Furthermore, the intelligent driving system can automatically determine and plan a to-be-planned matter for each travel task, without requiring explicit specification from the user, thereby avoiding a problem of an incomplete travel plan resulting from overlooking a particular to-be-planned matter by the user, thus improving accuracy and practicality of travel planning.

### BRIEF DESCRIPTION OF DRAWINGS

FIG. 1 is a block diagram illustrating a structure of an intelligent driving system according to an exemplary embodiment of the present disclosure;
FIG. 2 is a schematic flowchart illustrating a method for travel planning based on an intelligent driving system according to an exemplary embodiment of the present disclosure;
FIG. 3 is a schematic diagram illustrating a method for travel planning based on an intelligent driving system according to another exemplary embodiment of the present disclosure;
FIG. 4 is a schematic flowchart illustrating a method for travel planning based on an intelligent driving system according to another exemplary embodiment of the present disclosure;
FIG. 5 is a schematic flowchart illustrating a method for travel planning based on an intelligent driving system according to another exemplary embodiment of the present disclosure;
FIG. 6 is a schematic flowchart illustrating autonomously determining a travel purpose according to an exemplary embodiment of the present disclosure;
FIG. 7 is a schematic flowchart illustrating a method for travel planning based on an intelligent driving system according to another exemplary embodiment of the present disclosure;
FIG. 8 is a schematic flowchart illustrating a method for travel planning based on an intelligent driving system according to another exemplary embodiment of the present disclosure;
FIG. 9 is a schematic flowchart illustrating triggering, based on temporary information, of an operation of planning a to-be-planned matter according to an exemplary embodiment of the present disclosure;
FIG. 10 is a schematic flowchart illustrating triggering, based on temporary information, of an operation of planning a to-be-planned matter according to another exemplary embodiment of the present disclosure;
FIG. 11 is a schematic flowchart illustrating a method for travel planning based on an intelligent driving system according to another exemplary embodiment of the present disclosure;
FIG. 12 is a schematic flowchart illustrating determination of a planning result for a target matter according to an exemplary embodiment of the present disclosure;
FIG. 13 is a schematic flowchart illustrating determination of a planning result for a target matter according to another exemplary embodiment of the present disclosure;
FIG. 14 is a schematic flowchart illustrating a method for travel planning based on an intelligent driving system according to another exemplary embodiment of the present disclosure;
FIG. 15 is a schematic diagram illustrating a structure of an apparatus for travel planning based on an intelligent driving system according to an exemplary embodiment of the present disclosure;
FIG. 16 is a diagram illustrating a structure of an electronic device according to an embodiment of the present disclosure.

### DETAILED DESCRIPTION OF THE EMBODIMENTS

To explain the present disclosure, exemplary embodiments of the present disclosure will be described in detail below with reference to the accompanying drawings. Apparently, the described embodiments are merely some, not all, of embodiments of the present disclosure. It should be understood that, the present disclosure is not limited by the exemplary embodiments.

It should be noted that the relative arrangement of components and steps, numerical expressions, and numerical values set forth in these embodiments do not limit the scope of the present disclosure, unless otherwise specifically stated.

### Overview of Application

In an intelligent driving system, the system can plan, based on a speech command from a user, a to-be-planned matter indicated by the speech command. However, the prior intelligent driving system requires multiple rounds of interaction with the user to acquire a speech command from the user for each to-be-planned matter before it can formulate a complete travel plan. For example, the user inputting a speech command "navigate to Company B in City A" to the intelligent driving system, the intelligent driving system may parse out key information such as a departure place and a destination, and formulates a travel route from the current position of the user to Company B in City A accordingly. Afterwards, considering a need to refuel en route, the user issues another speech command "add waypoint C: gas station" to the intelligent driving system. The intelligent driving system parses the speech command from the user once again, and adds, to the original travel route, a to-be-planned matter of visiting gas station C. This process repeats until the user considers that all to-be-planned matters for the current travel have been planned, then the intelligent driving system can provide the user with a complete travel plan.

In this manner, the user is required to engage in multiple rounds of interaction with the intelligent driving system, resulting in a cumbersome operational process, and increasing operational costs and time costs of the user. Furthermore, this method of instructing each to-be-planned matter by a user requires the user to have a relatively high level of planning capability. If the user overlooks a particular to-be-planned matter, the intelligent driving system cannot actively supplement the matter. Consequently, a final travel plan cannot meet all travel requirements of the user.

An embodiment of the present disclosure provides a method for travel planning based on an intelligent driving system, where a user may directly specify a travel requirement for a current travel, and the intelligent driving system automatically determines a to-be-planned matter for meeting the travel requirement. In addition, the user may specify all travel requirements for the current travel at one time, and the intelligent driving system automatically determines a specific to-be-planned matter for meeting each of the travel requirements. The intelligent driving system may automatically plan the determined specific to-be-planned matter to achieve travel planning. Therefore, a problem of a cumbersome planning process resulting from requiring a user to personally determine a to-be-planned matter and gradually instruct an intelligent driving system to plan a to-be-planned matter can be effectively resolved.

### Exemplary System

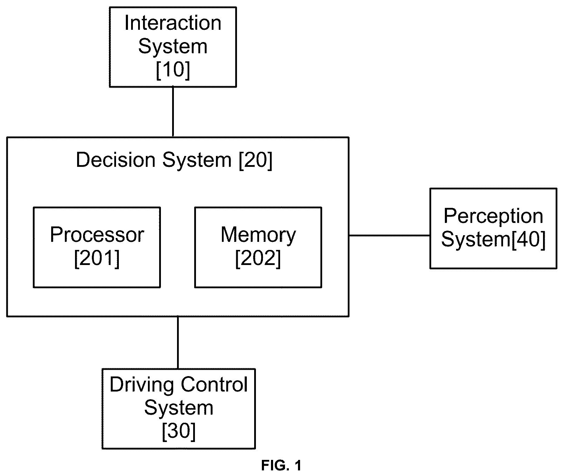

FIG. 1 is a block diagram illustrating a structure of an intelligent driving system according to an exemplary embodiment of the present disclosure.

The intelligent driving system may be applied to an autonomous vehicle. When a user is driving or riding in the vehicle, the intelligent driving system may formulate a travel plan based on a travel requirement of the user.

As shown in FIG. 1, in an embodiment, the intelligent driving system may include an interaction system 10, a decision system 20, and a driving control system 30. The decision system 20 may perform data transmission with the interaction system 10 and the driving control system 30 respectively. The interaction system 10 may include a touchscreen, keys, a microphone, an external device interface, and the like. In this way, the interaction system 10 may receive instructions input by the user in different manners, such as receiving, through a microphone, a first speech input by the user. The decision system 20 may understand a travel intention and a specific requirement of the user based on the first speech acquired by the interaction system 10 to determine a to-be-planned matter, and then formulate a corresponding travel plan for each to-be-planned matter, to obtain a complete travel planning result for a current travel. The driving control system 30 may control driving of the vehicle based on the planning result output from the decision system 20.

In an implementation, the intelligent driving system may further include a perception system 40. The perception system 40 may include at least one sensor, such as an image sensor. The image sensor may include at least one of a single-lens camera, a dual-lens camera, a triple-lens camera, a wide-angle camera, and a fisheye camera. The perception system 40 is used for collecting environmental data around the vehicle. The environmental data may include, for example, real-time traffic information, a road condition, and a weather condition. The perception system 40 may perform data transmission with the decision system 20. For example, the perception system 40 sends the collected environmental data around the vehicle to the decision system 20. In this way, the decision system 20 may formulate, based on the first speech and the environmental data, a travel plan that better conforms with an actual driving environment.

In an implementation, the decision system 20 may include one or more processors 201. The processor 201 may include a general-purpose processor, such as a CPU (Central Processing Unit) or a GPU (Graphics Processing Unit), or may include an accelerated computing unit designed for a deep learning task, an automated driving task, and the like, such as an NPU (Neural Processing Unit).

In an implementation, the decision system 20 may further include one or more memories 202. The memory 202 may store program instructions executable by the processor 201. The processor 201 may load and execute the program instructions in the memory 202 to implement functions of the decision system 20.

In addition, the memory 202 may also be configured for caching or storing intermediate data or result data generated by the processor 201 during operation, and storing a system file, an application file, a data file, and the like. Exemplarily, the memory 202 may store the environmental data collected by the perception system 40.

Exemplarily, the memory 202 may include, for example, a volatile memory, such as a DRAM (Dynamic Random Access Memory) or a SRAM (Static Random Access Memory); and may include an NVM (Non-Volatile Memory), such as a ROM (Read-Only Memory) or a flash memory.

In an implementation, the driving control system 30 may include one or more ECUs (Electronic Control Units), or the like. The driving control system 30 may execute the instructions from the decision system 20 through the one or more ECUs.

### Exemplary Method

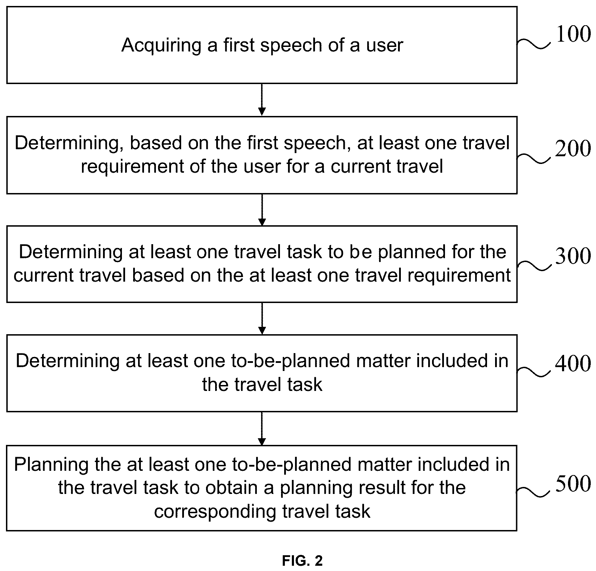

FIG. 2 is a schematic flowchart illustrating a method for travel planning based on an intelligent driving system according to an exemplary embodiment of the present disclosure. This embodiment may be applied to an electronic device. As shown in FIG. 2, the method includes the following steps:
Step 100: Acquiring a first speech of a user.

Exemplarily, an interaction system 10 of the intelligent driving system may acquire, through a microphone or the like, the first speech input by the user. The first speech contains a travel instruction from the user on a planning goal for the current travel. In an example, compared with the concise and clear travel instruction input by the user in the conventional method for travel planning, such as "navigate to Company B in City A", the travel instruction contained in the first speech in the present disclosure may contain more information. For example, a first speech V1 may contain "I will go to Company B in City A on a business trip today, will stay overnight there, need to dine out with colleagues after work, and hope to find a local specialty restaurant".

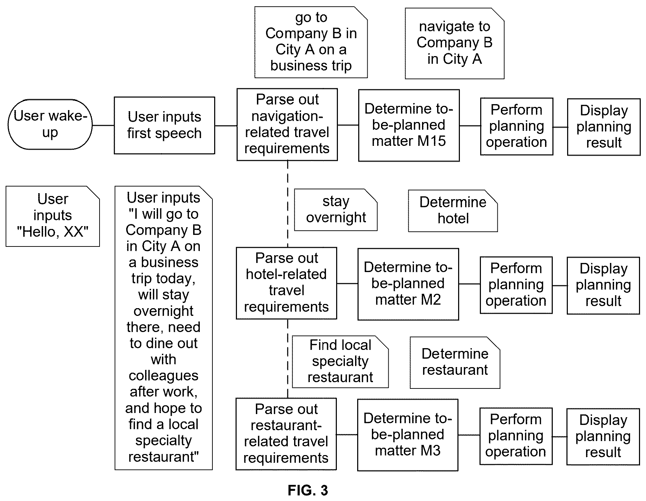

FIG. 3 is a schematic diagram illustrating a method for travel planning based on an intelligent driving system according to another exemplary embodiment of the present disclosure.

As shown in FIG. 3, before inputting the first speech, the user may wake up an intelligent assistant application of the intelligent driving system through speech inputting "Hello, XX" or in other manners, thereby achieving interaction between the intelligent driving system and the user through the intelligent assistant application. After waking up the intelligent assistant application, the user may input the above first speech V1 through the intelligent assistant application.

Step 200: Determining, based on the first speech, at least one travel requirement of the user for a current travel.

Exemplarily, the intelligent driving system may analyze the first speech by using a natural language processing technology, such as the Whisper model or LLMs (Large Language Models), to understand a travel intention of the user, thereby determining a travel requirement of the user for the current travel.

The travel requirement involves a relevant description given by the user for the planning goal for the current travel, and may include, but is not limited to, a destination that the user intends to arrive at, an expected arrival time, and special needs such as dining, accommodation, etc. during the travel. In the present disclosure, the first speech may be analyzed through the above natural language processing technology to obtain a corresponding travel requirement. In an example, if duration of the first speech is relatively long, it may be considered that the first speech contains a relatively large amount of information. In this case, multiple travel requirements may be parsed out from the first speech. As shown in FIG. 3, for the above first speech V1, the first speech V1 may be parsed and the following several travel requirements may be obtained: navigation-related travel requirement R1"go to Company B in City A on a business trip", hotel-related travel requirement R2 "stay overnight", and dining-related travel requirement R3 "find a local specialty restaurant to dine out".

Step 300: Determining at least one travel task to be planned for the current travel based on the at least one travel requirement.

Exemplarily, the intelligent driving system may determine a travel task to be planned for the current travel based on each travel requirement, each travel requirement corresponding to one travel task. For example, based on the above travel requirement R1, travel task J1 "go to Company B in City A" may be determined; for the above travel requirement R2, travel task J2 "go to a hotel" may be determined; and for the above travel requirement R3, travel task J3 "go to a restaurant" may be determined.

Step 400: Determining at least one to-be-planned matter included in the travel task.

The to-be-planned matter includes specific steps that need to be planned and performed for accomplishing a travel task, and may include, for example, navigating to destination a and booking a hotel of type b. Each travel task may correspond to at least one to-be-planned matter. In an example, the travel task may be analyzed and decomposed into one or more explicit steps, and then a respective to-be-planned matter is obtained based on each step. As shown in FIG. 3, for the above travel task J1, to-be-planned matter M15 "determine a route to Company B in City A" may be determined; for the above travel task J2, to-be-planned matter M2 "determine a hotel" may be determined; and for the above travel task J3, to-be-planned matter M3 "determine a restaurant" may be determined.

Exemplarily, the intelligent driving system may analyze the travel task to obtain multiple to-be-planned matters. The multiple to-be-planned matters may include a to-be-planned matter that is strongly related to a task content of the travel task and a to-be-planned matter that is obtained through association or other manners and that is weakly related to the task content of the travel task. The strongly related to-be-planned matter refers to a matter that definitely required to be planned and completed for accomplishing the travel task, where failure to complete such a matter may result in failure of the travel task. The weakly related matter refers to a matter corresponding to a new need indirectly triggered based on the travel task, where planning and completing such a matter can improve experience of the current travel, but failure to complete such a matter may not directly result in failure of the travel task. For example, for the above travel task J1, in addition to the to-be-planned matter M15 "determine a route to Company B in City A" strongly related to the task content "go to Company B in City A", to-be-planned matter M11 "determine a location of Company B in City A" strongly related to the task content "go to Company B in City A" may also be determined, and a to-be-planned matter weakly related to the task content "go to Company B in City A", such as M12 "determine an energy-recharging point" or M13 "determine a rest area" may also be determined.

Step 500: Planning the at least one to-be-planned matter included in the travel task to obtain a planning result for the corresponding travel task.

Exemplarily, each to-be-planned matter may be planned to obtain a planning result corresponding to each travel task. For example, for the above travel task J1, the to-be-planned matter M11 is planned, that is, the location of Company B in City A is determined. The to-be-planned matter M15 is planned, that is, a route from a position of the user to Company B in City A is planned. In this way, a navigation planning result from the position of the user to Company B in City A may be obtained. Moreover, after the planning result is obtained, the corresponding planning result may be further displayed to the user through an interface until the planning result is executed.

As can be learned from the above technical solution, according to the method provided in this embodiment of the present disclosure, a first speech of a user is acquired to understand a travel intention of the user, and at least one travel requirement of the user for a current travel is determined based on the travel intention. Then, based on the at least one travel requirement, at least one travel task to be planned for the current travel and at least one to-be-planned matter included in each travel task are determined automatically. Finally, each to-be-planned matter is planned to obtain a planning result for a corresponding travel task. In this process, the user needs to give only a complex instruction (that is, the first speech) containing multiple travel requirements at one time, without needing to indicate each to-be-planned matter one by one. Therefore, operational steps can be simplified for the user. Furthermore, the intelligent driving system can automatically determine and plan a to-be-planned matter for each travel task, without requiring explicit specification from the user, thereby preventing the user from overlooking a particular to-be-planned matter, thus improving completeness and practicality of travel planning.

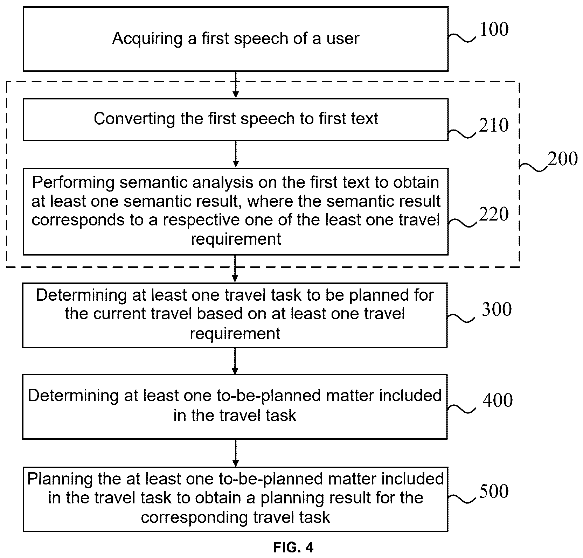

FIG. 4 is a schematic flowchart illustrating a method for travel planning based on an intelligent driving system according to another exemplary embodiment of the present disclosure.

As shown in FIG. 4, based on the foregoing embodiment shown in FIG. 2, step 200 may include the following steps:
Step 210: Converting the first speech to first text.

Exemplarily, technologies such as ASR (Automatic Speech Recognition) may be used to convert the first speech to first text in a text format, for subsequent natural language understanding and analysis.

Step 220: Performing semantic analysis on the first text to obtain at least one semantic result, where the semantic result corresponds to a respective one of the least one travel requirement.

Exemplarily, technologies such as NLP (Natural Language Processing) may be used to perform semantic analysis on the first text, recognize and extract key information from the text, such as a destination, a time requirement, and an activity arrangement, and then a corresponding semantic result is obtained based on the information. In some examples, the first text contains a large amount of contents, and in order to avoid missing information ensure integrity of the semantic analysis, a plurality of semantic results may be obtained based on the first text.

Each semantic result corresponds to a respective one of the least one travel requirement. In other words, each semantic result may be used as a textual description of one travel requirement. For example, for the above first speech V1, based on first text T1 obtained by conversion of the first speech V1, the following semantic results may be obtained: semantic result S1 "I will go to Company B in City A on a business trip today", corresponding to the above travel requirement R1; semantic result S2 "stay overnight there", corresponding to the above travel requirement R2; and semantic result S3 " I need to dine out with my colleague after work, and hope to find a local specialty restaurant", corresponding to the above travel requirement R3.

As can be learned from the above technical solutions, according to the method provided in the embodiments of the present disclosure, a first speech of a user can be converted to text through technologies such as automatic speech recognition and natural language processing, and semantic analysis is performed on the text to obtain a semantic result. In this way, a travel intention and a specific requirement of the user can be understood based on the semantic result, thereby providing a basis for formulating a travel plan.

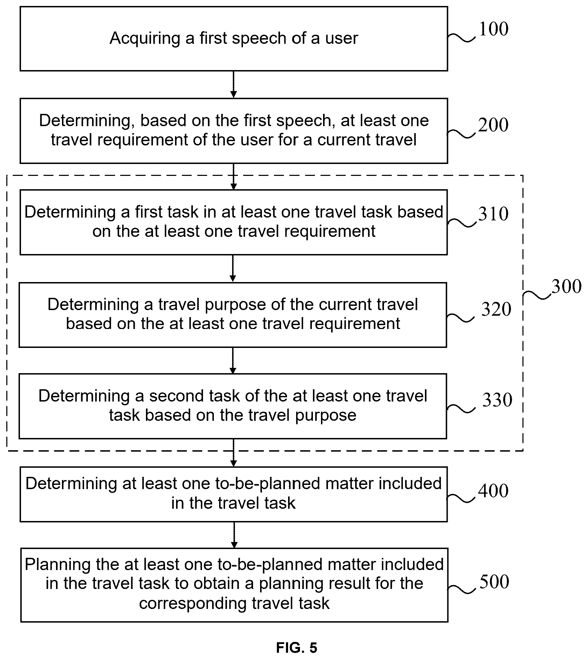

FIG. 5 is a schematic flowchart illustrating a method for travel planning based on an intelligent driving system according to another exemplary embodiment of the present disclosure.

As shown in FIG. 5, based on the foregoing embodiment shown in FIG. 2, step 300 may include the following steps:
Step 310: Determining a first task of the at least one travel task based on the at least one travel requirement.

Exemplarily, the first task required to be planned in the current travel may be determined based on an explicit plan instruction contained in each travel requirement. In some embodiments, the first speech input by the user typically explicitly indicate a need to navigate to a particular destination. Therefore, the travel requirement obtained based on the first text contains an explicit instruction of navigation route planning. Therefore, the first task may be a navigation-type task. For example, if the travel requirement is "go to City A on a business trip", it may first be determined that the travel requirement contains an explicit planning instruction "go to City A". Therefore, the first task "navigate to City A" that belongs to a navigation-type task may be determined.

Step 320: Determining a travel purpose of the current travel based on the at least one travel requirement.

A user intention contained in the travel requirement is analyzed, and then the travel purpose of the current travel is determined. The travel purpose may be a business trip, picking up or dropping off children, commuting, picking up or dropping off friends at the airport/station, self-driving tour, shopping at a mall, going to a restaurant, and the like. This is not limited in the present disclosure.

Exemplarily, for the above travel requirement "go to City A on a business trip", the travel purpose of the current travel may be determined as "business trip".

Exemplarily, for a scenario in which the first speech corresponds to multiple travel requirements, based on a dependency relationship between the respective travel requirements, the multiple travel requirements contained in the first speech may be comprehensively analyzed from an overall perspective to obtain a final travel purpose. For example, the above travel requirements R1, R2, and R3 may be comprehensively analyzed. Because the travel requirements R2 and R3 depend on travel requirement R1, that is, in a tree structure, travel requirement R1 may be used as a root node, and travel requirements R2 and R3 as child nodes, the travel purpose "business trip" of the current travel may be obtained based on travel requirement R1, rather than obtaining three travel purposes "business trip", "hotel accommodation", and "restaurant dining" by analyzing the travel requirements R1, R2, and R3, respectively.

Exemplarily, if none of the travel requirements explicitly indicate the travel purpose, or the travel purpose implied by the travel requirements cannot be obtained through inference based on the travel requirements, the travel purpose may be inferred based on in-vehicle and out-of-vehicle environmental information collected by the perception system 40.

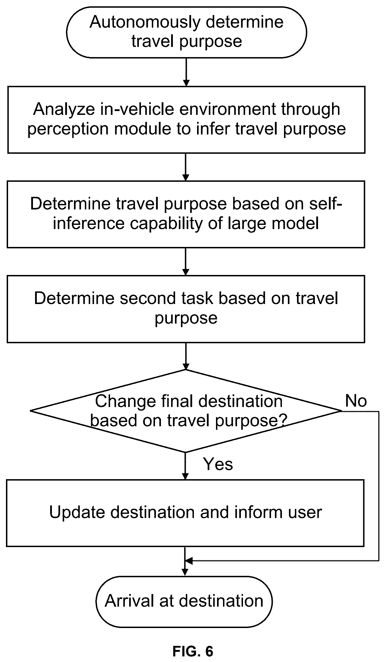

FIG. 6 is a schematic flowchart illustrating autonomously determining a travel purpose according to an exemplary embodiment of the present disclosure.

As shown in FIG. 6, in an embodiment, the travel purpose of the current travel may be determined based on information collected by the perception system 40. The information collected by the perception system 40 may include in-vehicle environmental information collected by an onboard camera and a sensor, such as a number of passengers, luggage or the like. In this way, the intelligent driving system may infer the travel purpose of the current travel, such as business trip, picking up or dropping off children, airport picking up or dropping off, or shopping at a supermarket, based on a self-inference capability of a large model embedded in the system and based on the information collected by the perception system 40. In an example, the intelligent driving system may also combine the travel requirements and the information collected by the perception system to infer a more accurate travel purpose.

Step 330: Determining a second task of the at least one travel task based on the travel purpose.

Exemplarily, the second task may be determined through association or other manners based on the travel purpose of the current travel. The second task is a travel task that cannot be determined based on an explicit planning instruction contained in each travel requirement, but is related to the current travel. Exemplarily, because the first speech input by the user typically only explicitly indicates the need to navigate to a particular destination, while ignoring other actual needs related to the destination, such as needs related to living services like accommodation and dining, etc., the second task may be a living service-type task. For example, for the above travel purpose "business trip", although the user does not explicitly instruct the need to book a hotel, considering that activities possibly involved in the business trip may not end on the same day, the second task "book a hotel" is obtained.

Referring to FIG. 6 above, after the travel purpose is determined to be airport picking up or dropping off, a corresponding second task, such as "fight query" or "delay reminder", may be determined. In addition, it may also be determined, based on the travel purpose, whether a final destination needs to be changed. For example, for the travel purpose "business trip", whether to change the destination from "Company B in City A" to a hotel that the user is to stay may be determined and the user is informed. In this way, the intelligent driving system may provide personalized services for the user based on the second task of the living service-type.

As can be learned from the above technical solution, according to the method provided in the embodiments of the present disclosure, a first task can be obtained based on an explicit planning instruction in a travel requirement, a travel purpose can also be obtained based on the travel requirement, and then a second task related to a current travel can be obtained through expansion. In this way, based on a travel requirement of a user and in combination with a travel purpose, actual the user's needs are comprehensively and profoundly understood, which not only considers a planning instruction explicitly stated by the user, but also infers, based on the travel purpose, a planning instruction that the user may need but does not explicitly state. This allows the travel plan to be more complete and helps improve intelligence and personalization levels of travel planning and formulation, thereby improving user experience.

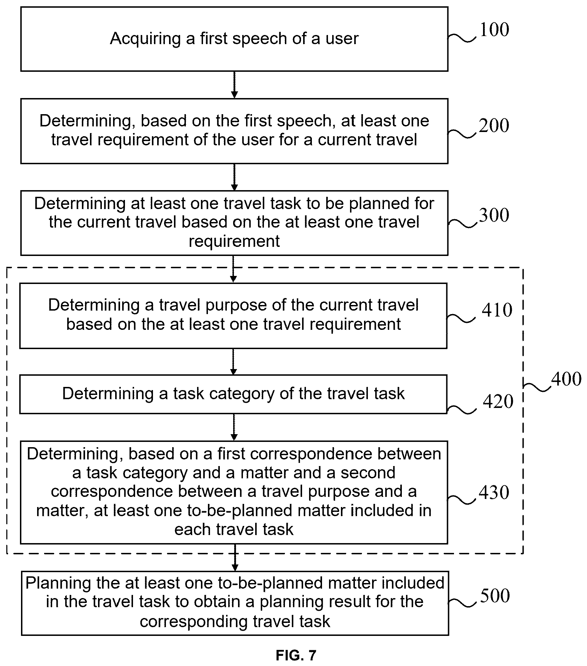

FIG. 7 is a schematic flowchart illustrating a method for travel planning based on an intelligent driving system according to another exemplary embodiment of the present disclosure.

As shown in FIG. 7, based on the foregoing embodiment shown in FIG. 2, step 400 may include the following steps:
Step 410: Determining a travel purpose of the current travel based on the at least one travel requirement.

The travel requirement is profoundly understood, a user intention is analyzed, and then the travel purpose of the current travel is determined. For detailed description of step 410, refer to step 320 above, which is not repeated herein.

Step 420: Determining a task category of the travel task.

Considering diversity of travel tasks, the task category of each travel task may be determined based on a specific content of the travel task, so as to determine to-be-planned matters in a targeted manner based on different task categories.

In an embodiment, travel task categories may include navigation-type tasks, living service-type tasks, entertainment-type tasks, etc.. For example, for the above travel task J1 "go to Company B in City A", its task category may be determined as a navigation-type task. For the travel task J2 "go to a hotel", its task category may be determined as a living service-type task. For the above travel task J3 "go to a restaurant", its task category may be determined as a living service-type task.

Step 430: Determining, based on a first correspondence between a task category and a matter and a second correspondence between a travel purpose and a matter, at least one to-be-planned matter included in each travel task.

A first correspondence may exist between one task category and at least one matter. The first correspondence between a task category and a matter may be used for indicating a to-be-planned item typically required to be planned for a travel task corresponding to the task category. For example, for a navigation-type task, a to-be-planned matter typically required to be planned includes route formulation. In other words, there may be a first correspondence between the navigation-type task and a route formulation matter. For a living service-type task, a to-be-planned matter typically required to be planned may include booking a hotel, booking a restaurant, purchasing a ticket, or the like. In other words, there may be a first correspondence between the living service-type task and a hotel booking matter, a restaurant booking matter, a ticket purchasing matter, or the like. The first correspondence of the present disclosure is not limited to the above task categories and matters.

A second correspondence may exist between one travel purpose and at least one matter. The second correspondence between a travel purpose and a matter may be used for indicating a to-be-planned item typically required to be planned for the travel purpose. For example, for the travel purpose "business trip", a to-be-planned matter typically required to be planned includes booking a hotel, booking a restaurant, or the like. Therefore, there may be a second correspondence between the business trip and a hotel booking matter, a restaurant booking matter, or the like. Similarly, there may be a second correspondence between picking up and dropping off children and a parking lot determination matter. There may be a second correspondence between commuting and a parking lot determination matter or a route selection matter. There may be a second correspondence between picking up or dropping off friends at the airport/station and a flight/high-speed train/subway schedule inquiry matter. There may be a second correspondence between self-driving tour and a journey planning matter, a hotel booking matter, a restaurant booking matter, a scenery spot ticket matter, and an energy-recharging matter. There may be a second correspondence between shopping at a mall and a parking lot matter. There may be a second correspondence between going to a restaurant and a table reservation matter and a parking lot matter. The second correspondence of the present disclosure is not limited to the above travel purposes and matters.

From the dimensions of task category and travel purpose, the first correspondence and the second correspondence can be comprehensively considered to determine the to-be-planned matter included in each travel task. For example, for the above travel task J1 "go to Company B in City A", its task category has been determined as a navigation-type task, then the to-be-planned matter M11 "determine a location of Company B in City A" and the to-be-planned matter M15 "determine a route to Company B in City A" may be determined based on a first correspondence between navigation-type tasks and route formulation matters. In addition, because its task category has been determined as a navigation-type task and the travel purpose is "business trip" rather than picking up or dropping off friends at the airport/station, to-be-planned matter M14 "determine a parking lot" may also be determined based on the second correspondence between navigation-type tasks and business trip purposes. For the above travel task J2 "go to a hotel", its task category has been determined as a living service-type task and the travel purpose is "business trip", then, to-be-planned matter M2 may be determined as "determine a hotel" based on a first correspondence between living service-type tasks and hotel booking matters, and a second correspondence between business trips and hotel booking matters. For the above travel task J3 "go to a restaurant," similarly, to-be-planned matter M3 may be determined as "determine a restaurant."

As can be learned from the above technical solution, according to the method provided in the embodiments of the present disclosure, a task category and a travel purpose are determined, respectively, and then a first correspondence between a task category and a matter, and a second correspondence between a travel purpose and a matter are comprehensively considered to determine a to-be-planned matter corresponding to each travel task. In this way, considering that travel tasks of different categories correspond to different to-be-planned matters and different travel purposes correspond to different required/unrequired to-be-planned matters, a more accurate and practical to-be-planned matter can be obtained. Therefore, accuracy and practicality of travel planning can be improved, enabling the travel planning to better conform to actual needs of a user.

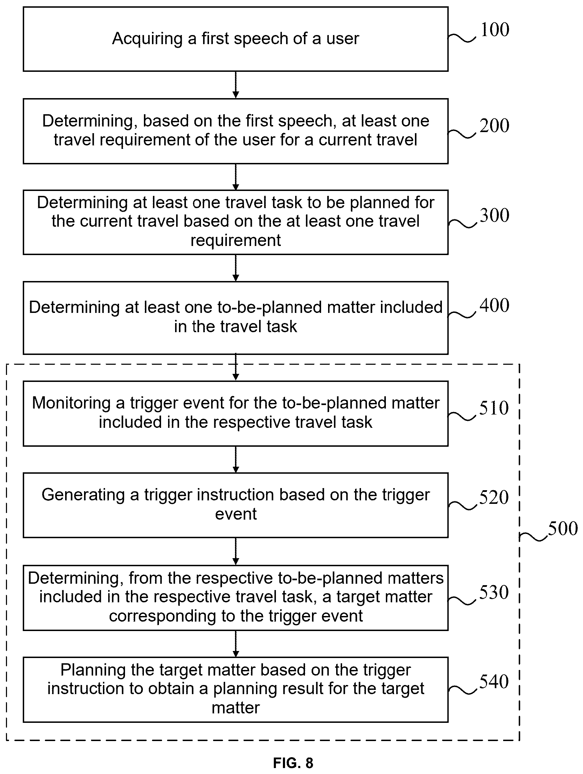

FIG. 8 is a schematic flowchart illustrating a method for travel planning based on an intelligent driving system according to another exemplary embodiment of the present disclosure.

As shown in FIG. 8, based on the foregoing embodiment shown in FIG. 2, step 500 may include the following steps:
Step 510: Monitoring a trigger event for the to-be-planned matter included in the respective travel task.

After the respective to-be-planned matter is determined, the trigger event for each to-be-planned matter included in the respective travel task is monitored in real time. Each to-be-planned matter may correspond to at least one trigger event. The trigger event is an event for initiating a planning operation for the to-be-planned matter. In this way, the intelligent driving system may perform, in response to the trigger event, a planning operation on the to-be-planned matter corresponding to the trigger event.

In an embodiment, when there is an execution order among the respective to-be-planned matters, the trigger event may be a planning result for another to-be-planned matter. For example, after planning for to-be-planned matter M2 "determine a hotel" is performed and a corresponding planning result is obtained, the planning result may be used as a trigger event for to-be-planned matter M3 "determine a restaurant". In other words, after the planning of to-be-planned matter M2 "determine a hotel" is accomplished, planning for to-be-planned matter M3 "determine a restaurant" is triggered.

In another embodiment, the trigger event may be temporary information, such as a temporary instruction of a user, a real-time vehicle condition, a real-time road condition, a real-time state of the user, or a real-time driving behavior.

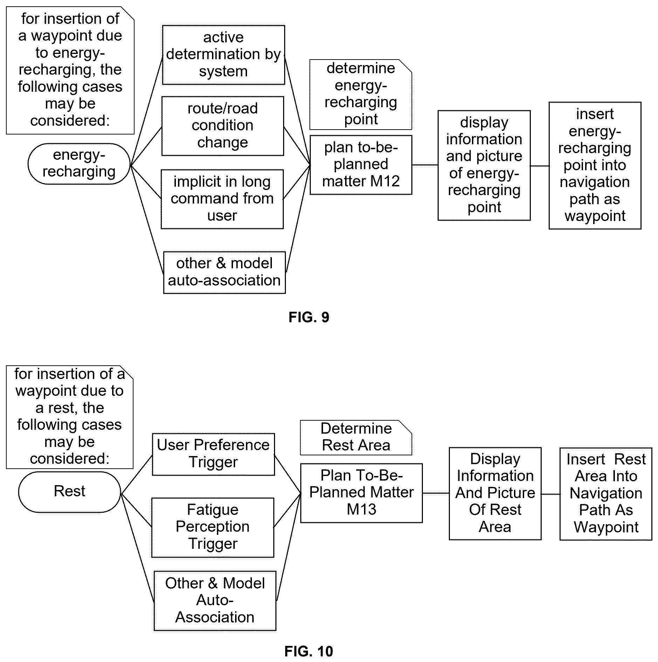

FIG. 9 is a schematic flowchart illustrating triggering, based on temporary information, of an operation of planning a to-be-planned matter according to an exemplary embodiment of the present disclosure.

Exemplarily, as shown in FIG. 9, a trigger event corresponding to the to-be-planned matter M12 "determine an energy-recharging point" may include system active determination, for example, the intelligent driving system may determine, before the trip starts, based on a current battery level of the vehicle and a distance from a start position to Company B in City A, that the battery level is insufficient to complete the entire journey; or may include a route/road condition change, such as missing an exit ramp while the vehicle is traveling towards Company B in City A causing the journey to become longer; or may include an energy-recharging instruction contained in the first speech input by the user, such as "I need to go to XX, charge on the way"; or may include other temporary situations, such as temporarily receiving a user instruction while the vehicle is traveling towards Company B in City A; or may include large-model autonomous association of the intelligent driving system. When any trigger event corresponding to the to-be-planned matter M12 "determine an energy-recharging point" is monitored to occur, a planning operation may be performed on the to-be-planned matter M12 "determine an energy-recharging point" corresponding to the event. In this way, the intelligent driving system may respond in real time to changes in user needs and the environment and perform dynamic planning, which can improve practicality of the planning result.

FIG. 10 is a schematic flowchart illustrating triggering, based on temporary information, of an operation of planning a to-be-planned matter according to another exemplary embodiment of the present disclosure.

Exemplarily, as shown in FIG. 10, the intelligent driving system may trigger an event "determine a rest area" and then perform a planning operation on the to-be-planned matter M13 "determine a rest area" corresponding to the event, when determining, based on a user preference, that the user likes to rest after the vehicle's continuous driving time reaches a certain specific length, or perceives user fatigue through the camera, etc., or under other associative trigger situations,.

Step 520: Generating a trigger instruction based on the trigger event.

After the trigger event is monitored, a corresponding trigger instruction may be generated. The trigger instruction is used for instructing to perform a planning operation on the to-be-planned matter. The trigger instruction may include identification information of the to-be-planned matter and prerequisite information extracted from the trigger event. For example, for the to-be-planned matter M3 "determine a restaurant", if its trigger event is the planning result for the to-be-planned matter M2 "determine a hotel", the trigger instruction may include identification information of the to-be-planned matter M2 and prerequisite information extracted from the trigger event (that is, the planning result for the to-be-planned matter M2), such as a location of the hotel and an estimated check-in time. Then, when determining the restaurant, a distance from the hotel to the restaurant, the estimated check-in time for the hotel, and business hours of the restaurant may be considered comprehensively, thereby providing the user with more considerate and personalized restaurant recommendations and reservation services. For another example, for the to-be-planned matter M13 "determine a rest area", if its trigger event is perceiving user fatigue, the trigger instruction may include a fatigue perception result. In this way, during the planning for the to-be-planned matter M13 "determine a rest area", a rest area closest to the current position may be preferentially selected.

Step 530: Determining, from the respective to-be-planned matters included in the respective travel task, a target matter corresponding to the trigger event.

After the trigger event is monitored, the target matter corresponding to the trigger event may be determined from the respective to-be-planned matters. The target matter is a to-be-planned matter indicated by the trigger instruction and requiring a planning operation. After the target matter is determined, the planning operation may be performed on the target matter to obtain a corresponding planning result.

Step 540: Planning the target matter based on the trigger instruction to obtain a planning result for the target matter.

After the trigger instruction is generated and the target matter is determined, the target matter may be planned based on the trigger instruction, thereby obtaining the corresponding planning result. Referring to FIG. 9, the intelligent driving system performs a planning operation for the to-be-planned matter M12 "determine an energy-recharging point", autonomously selects an energy-recharging point based on reference information such as a user profile/current state/route and road conditions/price and time consumption, obtains a corresponding planning result, displays the planning result in an interface, inserts the selected energy-recharging point as a waypoint into a navigation route, and then re-plans a navigation route to ensure that the new navigation route can pass through the waypoint. Referring to FIG. 10, the intelligent driving system performs a planning operation for the to-be-planned matter M13 "determine a rest area", autonomously selects a rest area, obtains a corresponding planning result, displays the planning result in an interface, inserts the selected rest area point as a waypoint into a navigation route, and then re-plans a navigation route to ensure that the new navigation route can pass through the waypoint.

If one travel task contains only one to-be-planned matter, a planning result for the to-be-planned matter may be used as a planning result for the travel task. If one travel task contains multiple to-be-planned matters, a planning result for a last target matter among the multiple to-be-planned matters is a planning result for the corresponding travel task. For example, the above travel task J1 "go to Company B in City A" may include to-be-planned matters M11 "determine Company B in City A", M12 "determine an energy-recharging point", M13 "determine a rest area", M14 "determine a parking lot", and M15 "determine a route to Company B in City A". In this case, a planning result for M11, that is, the location of Company B in City A, may be obtained first. Then, planning results of M12 and M13, that is, an energy-recharging point and a rest area between the current position and Company B in City A, are obtained, respectively, and a planning result for M13, that is, a hotel near Company B in City A, is obtained. Finally, the energy-recharging point in M12 and the rest area in M13 are used as waypoints for the route, and the parking lot in M14 is used as an end point of the route. Then, route planning for M11 is performed based on the waypoints and the end point to obtain a planning result for M15, that is, a navigation route passing through the energy-recharging point and the rest area and finally arriving at the parking lot, and a time plan. In this way, the planning result for M15 may be used as a planning result for the travel task J1 "go to Company B in City A".

It should be noted that the planning result for the travel task is not fixed. After the planning result for the travel task is obtained, planning may also be performed for a new target matter based on a new trigger event monitored in real time, thereby updating the planning result for the travel task based on a planning result for the new target matter. For example, after the planning result for M15 is used as the planning result for the travel task J1 "go to Company B in City A", if the intelligent driving system receives a user instruction "buy a bunch of flowers on the way" while the vehicle is traveling, an event "determine a flower shop" may be triggered, then perform a planning operation on a to-be-planned matter "determine a flower shop" corresponding to the event, and update a navigation route and a time plan based on a planning result for the to-be-planned matter "determine a flower shop", thereby obtaining an updated planning result for the travel task J1 "go to Company B in City A".

As can be learned from the above technical solution, according to the method provided in the embodiments of the present disclosure, a trigger instruction is generated by monitoring a trigger event, such as a planning result for another to-be-planned matter, a target matter is determined, and the target matter is planned. In this way, a planning sequence of different to-be-planned matters can be considered, and therefore duplicate planning and invalid planning can be reduced, thereby improving planning efficiency. In addition, a trigger instruction is also generated by monitoring a trigger event, such as a temporary instruction, a real-time vehicle condition and road condition, or a user state, a target matter is determined, and the target matter is planned. In this way, dynamically changing needs can be met, thereby achieving dynamic travel planning. If a user temporarily changes a destination or needs to pass through a particular location, or a traveling environment, a user state, and the like change, the intelligent driving system may perform planning in real time to obtain a corresponding planning result, thereby enabling the planning result to better conform with an actual need under a current situation.

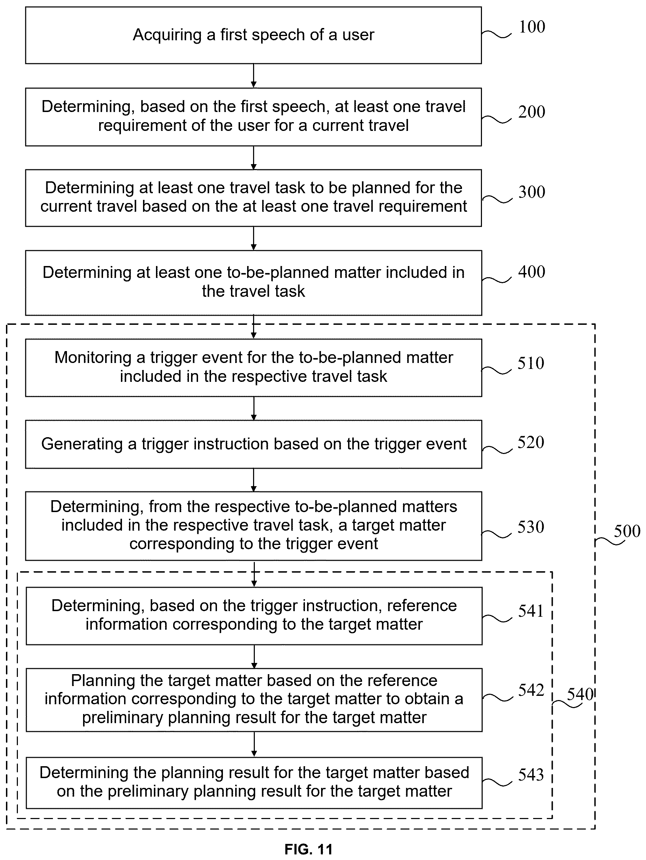

FIG. 11 is a schematic flowchart illustrating a method for travel planning based on an intelligent driving system according to another exemplary embodiment of the present disclosure.

As shown in FIG. 11, based on the foregoing embodiment shown in FIG. 8, step 540 may include the following steps:
Step 541: Determining, based on the trigger instruction, reference information corresponding to the target matter.

Exemplarily, the reference information corresponding to the target matter is first determined based on the trigger instruction to perform planning based on reference information. The reference information may include at least one of a user instruction (such as a hotel type or a budget range) extracted from first speech input by the user, user information (such as a user profile/preference or a user state), or driving information (such as a road condition, weather, or a driving behavior), and may also include other information associated with the target matter, such as living service-type information. This is not limited in the present disclosure. Different matters may correspond to different reference information.

As shown in FIG. 9 above, the intelligent driving system may determine reference information, such as a user profile/current state/route and road conditions/price and time consumption for the to-be-planned matter M12 "determine an energy-recharging point".

Step 542: Planning the target matter based on the reference information corresponding to the target matter to obtain a preliminary planning result for the target matter.

Based on the reference information corresponding to the target matter, also in view of information such as a task type of the travel task corresponding to the target matter, the target matter may also be planned. For example, if the target matter is "determine a route to Company B in City A", based on driving information, such as a real-time road condition or road restriction, in combination with a navigation algorithm, an optimal route from a current position to Company B in City A may be obtained as a preliminary planning result. For another example, if the target matter is "determine a hotel", a hotel meeting the user's needs may be obtained as a preliminary planning result based on a user instruction, such as a hotel requirement, for example, a hotel brand, a budget, a time and a date, a distance from a destination, or an applicable scenario, in combination with user information, such as a hotel type preferred by the user or a price range, as well as other information associated with "determine a hotel", such as hotel distribution and hotel reviews in City A. Each hotel meeting the user's needs may be used as a preliminary planning result.

Step 543: Determining the planning result for the target matter based on the preliminary planning result for the target matter.

If the intelligent driving system may obtain a uniquely determined preliminary planning result based on the reference information, the preliminary planning result is determined as the planning result for the target matter.

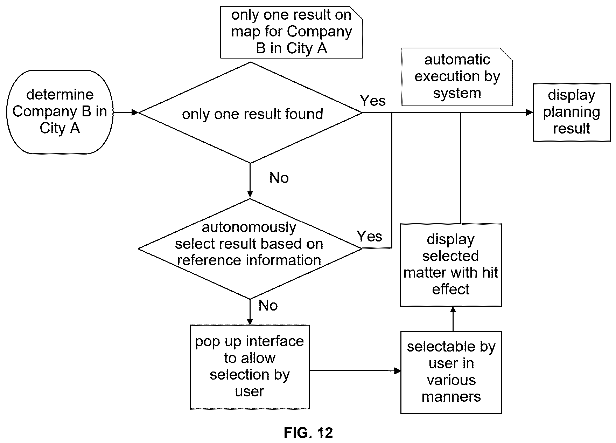

FIG. 12 is a schematic flowchart illustrating determination of a planning result for a target matter according to an exemplary embodiment of the present disclosure.

As shown in FIG. 12, for the above target matter "determine Company B in City A", if only one search result can be obtained by searching for Company B in City A on a map, the search result may be used as a planning result for the target matter "determine Company B in City A". If a plurality of search results are obtained by searching for Company B in City A on a map, one search result may be automatically selected, from the plurality of search results, as the planning result for the target matter "determine Company B in City A" based on the reference information. For example, based on information, such as upstream and downstream companies associated with a company employing the user, in the user profile, one that the user is more likely to go to may be determined from multiple companies B found. After the planning for the target matter "determine Company B in City A" is completed, a planning result may be displayed, that is, information such as a location and a picture of the determined Company B in City A may be displayed.

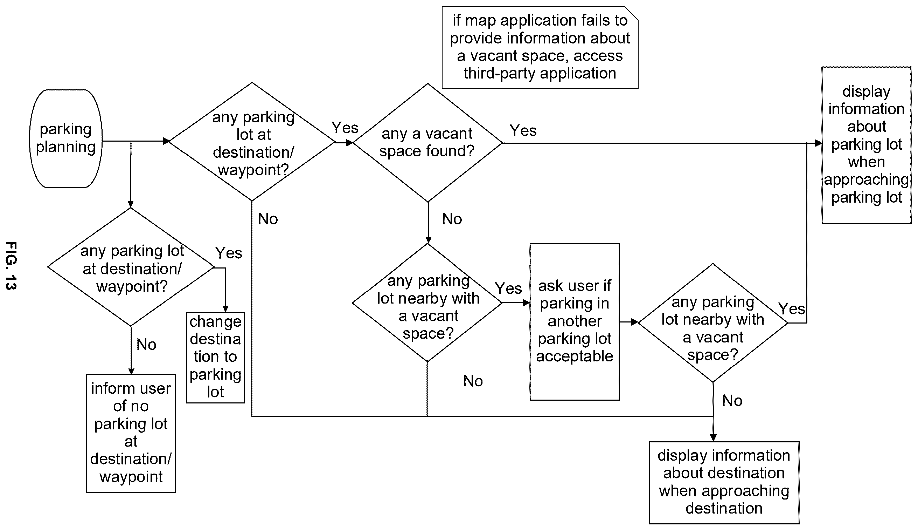

FIG. 13 is a schematic flowchart illustrating determination of a planning result for a target matter according to another exemplary embodiment of the present disclosure.

As shown in FIG. 13, for a target matter "determine a parking lot", planning may be performed before navigation to a destination is initiated and a determined parking lot is used as a new destination, or planning may be performed when the destination is about to be reached. In a specific planning process, it may be determined first whether there is a parking lot at the destination or a waypoint. If there is a parking lot a, it may be checked whether there is a vacant space in the parking lot a. If there is a vacant space, the parking lot a may be used as a planning result for the target matter "determine a parking lot". In this way, when the user approaches the parking lot, information and a picture of the parking lot a may be displayed.

In an embodiment, if the intelligent driving system cannot obtain a uniquely determined preliminary planning result based on the reference information, multiple preliminary planning results may all be fed back to the user, and a planning result for the target matter is determined based on a second instruction of the user for the preliminary planning results.

Referring to FIG. 12 again, for the above target matter "determine Company B in City A", if multiple companies B in City A are found and each Company B in City A may serve as a preliminary planning result, an interface may pop up, displaying "I cannot determine which one, please tell me" and the multiple companies B in City A. In this case, the user may select, from the multiple companies B in City A displayed on the interface, an N^{th} Company B in City A by directly saying "the N^{th} one", manually tapping option N, using a hand gesture for "N", or in other manners. Afterwards, the option corresponding to the N^{th} Company B in City A is displayed on the interface with a hit effect for a period of time, such as a continuous highlight effect for 0.5 second. If the user does not change the option to another option during this period of time, the N^{th} Company B in City A is used as a final planning result, and location information and picture information of the N^{th} Company B in City A are displayed.

Referring to FIG. 13 again, for the target matter "determine a parking lot", if there is no vacant space in the parking lot a at the destination, it may be checked whether there is a vacant space in a parking lot slightly farther away (for example, within 500 meters). If it is found that there is still a vacant space in a parking lot b within 500 meters, information about the parking lot b may be displayed on the interface and the user may be asked whether it is acceptable to park at the parking lot b. If confirmation information is received from the user, the parking lot b may be used as a preliminary planning result for the target matter "determine a parking lot". In this way, when the user approaches the parking lot, information and a picture of the parking lot b may be displayed.

Referring to FIG. 13 again, if no further instruction is received from the user, corresponding information may be displayed to the user before execution of the target matter to prompt the user to execute the target matter. For example, for the target matter "determine a parking lot", if there is no vacant space in the parking lot a at the destination, and the user has not confirmed that parking at the parking lot b is acceptable, when the user drives the vehicle close to the destination before parking, information and a picture of the destination may be displayed through interface, and meanwhile, parking prompt information is displayed on the interface, such as "Approaching the destination, no parking information available for now, please park at a safe position" .

Furthermore, for the to-be-planned matters "determine a hotel" and "determine a restaurant", planning results may also be obtained in the above manner, which is not repeated herein.

As can be learned from the above technical solution, according to the method provided in the embodiments of the present disclosure, at least one possible preliminary planning result can be obtained based on reference information of a target matter, and when a unique preliminary planning result cannot be obtained, a user can be enabled to select a result therefrom as a final planning result by using a user interaction interface or in other manners. In this way, considering uncertainty possibly existing during planning by the intelligent driving system, user interaction ensures that the final planning result better meets the user's actual needs, so that accuracy and practicality of travel planning can be improved.

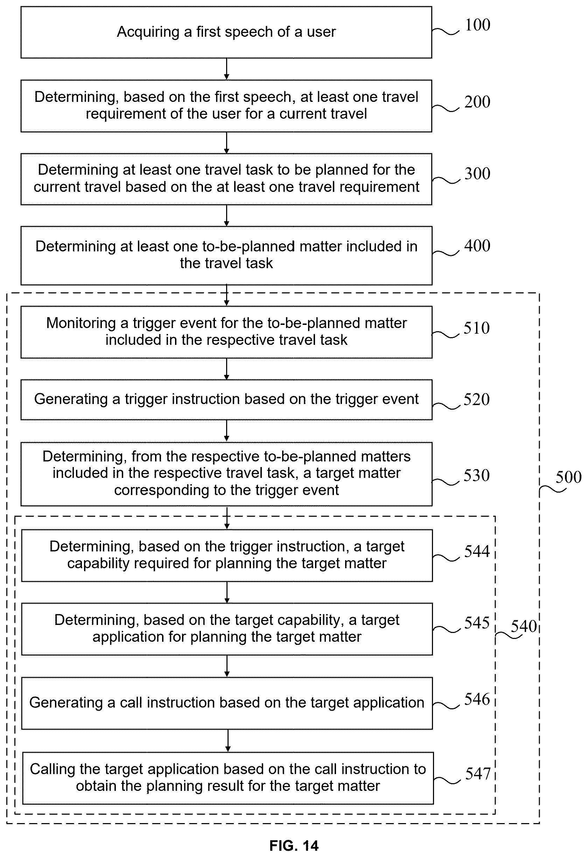

FIG. 14 is a schematic flowchart illustrating a method for travel planning based on an intelligent driving system according to another exemplary embodiment of the present disclosure.

As shown in FIG. 14, based on the foregoing embodiment shown in FIG. 8, step 540 may include the following steps:
Step 544: Determining, based on the trigger instruction, a target capability required for planning the target matter.

Exemplarily, after the trigger instruction is generated, a corresponding target capability may be determined based on the trigger instruction. The target capability refers to a technology and a capability on which the intelligent driving system relies when performing a planning operation on the target matter. Different target matters may correspond to different target capabilities. For example, a target matter "determine a route to Company B in City A" may require target capabilities such as map point location calculation and navigation algorithms, while target matters "determine a hotel" and "book a hotel" may require target capabilities such as a hotel search algorithm and user profile analysis.

Step 545: Determining, based on the target capability, a target application for planning the target matter.

The target capability may be provided by a corresponding target application. For example, functions such as destination location determination and a navigation algorithm may be provided by a map application built into the intelligent driving system. When an application (such as the map application) mainly used by the intelligent driving system does not have a target planning capability, for example, for the target matters "determine a hotel" and "book a hotel ", if the map application of the intelligent driving system does not provide target capabilities such as hotel search and hotel booking, another application (such as a hotel application) may be called for planning.

Step 546: Generating a call instruction based on the target application.

After the target application is determined, a corresponding call instruction may be generated. The call instruction refers to an instruction for calling the target application to obtain the target capability. For example, after it is determined that the target application is a hotel application, a call instruction C1 for calling the hotel application may be generated.

Step 547: Calling the target application based on the call instruction to obtain the planning result for the target matter.

After generating the call instruction, the intelligent driving system may send the call instruction to the target application. In this way, after receiving the call instruction, the target application may plan the target matter based on the target capability to obtain the planning result for the target matter. Through such a design, the intelligent driving system can accomplish planning for different to-be-planned matters based on call instructions by using different target capabilities of different target applications, thereby improving comprehensiveness of travel planning.

For example, the intelligent driving system may call the hotel application based on the above call instruction C1, and then plan the target matter "determine a hotel" by using a target capability of the hotel application, such as hotel search, to obtain a corresponding planning result. The target matter "book a hotel" may also be planned, so that hotel booking can be automatically initiated based on the hotel application.

As can be learned from the above technical solution, according to the method provided in the embodiments of the present disclosure, a target capability required by a target matter is determined, a target application for planning the target matter is determined based on the target capability, and a call instruction is generated to call the target application to plan the target matter. As such, disadvantages of the intelligent driving system in terms of weak capabilities in matters related to living services can be offset, and different capabilities of the intelligent driving system and other applications are utilized fully, thereby improving comprehensiveness of travel planning.

The solutions involved in the present disclosure are not limited to the above-mentioned embodiments.

### Exemplary Apparatus

The method for travel planning based on an intelligent driving system provided in the embodiments of the present disclosure is described above. It may be understood that, to implement the functions of the method for travel planning, the intelligent driving system may include corresponding hardware and software for implementing hardware functions.

A person skilled in the art should easily conceive that, the steps of the method for travel planning based on an intelligent driving system described in conjunction with the embodiments of the present disclosure may be implemented in a form of hardware or a combination of software-driven hardware in the embodiments of the present disclosure. Whether a certain function is implemented in a form of hardware or software-driven hardware depends on specific application and design constraints of the technical solutions. A person skilled in the art may use different methods to implement the described functions for each specific application, but such implementation should not be considered as being beyond the scope of the present disclosure.

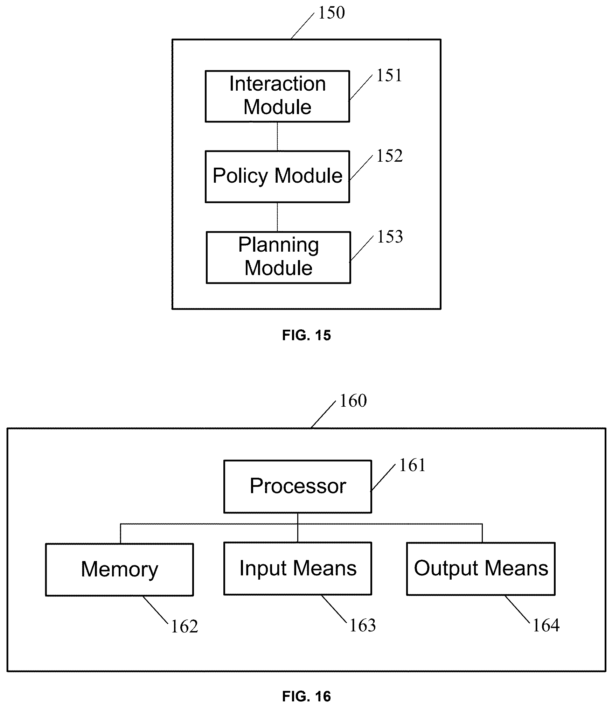

FIG. 15 is a schematic diagram illustrating a structure of an apparatus for travel planning based on an intelligent driving system according to an exemplary embodiment of the present disclosure.

As shown in FIG. 15, in an embodiment, the apparatus 150 for travel planning based on an intelligent driving system includes an interaction module 151, a policy module 152, and a planning module 153.

The interaction module 151 is configured for acquiring a first speech of a user.

The policy module 152 is configured for determining, based on the first speech, at least one travel requirement of the user for a current travel.

The policy module 152 is further configured for determining at least one travel task to be planned for the current travel based on the at least one travel requirement.

The policy module 152 is further configured for determining at least one to-be-planned matter included in the travel task.

The planning module 153 is configured for planning the at least one to-be-planned matter included in the travel task to obtain a planning result for the corresponding travel task.

In an embodiment, the policy module 152 is configured for converting the first speech to first text; and performing semantic analysis on the first text to obtain at least one semantic result, where the semantic result corresponds to a respective one of the least one travel requirement.

In an embodiment, the policy module 152 is configured for determining a first task of the at least one travel task based on the at least one travel requirement; determining a travel purpose of the current travel based on the at least one travel requirement; and determining a second task of the at least one travel task based on the travel purpose.

In an embodiment, the policy module 152 is configured for determining a travel purpose of the current travel based on the at least one travel requirement; determining a task category of the travel task; and determining, based on a first correspondence between a task category and a matter and a second correspondence between a travel purpose and a matter, at least one to-be-planned matter included in each travel task.

In an embodiment, the planning module 153 is configured for monitoring a trigger event for the to-be-planned matter included in the respective travel task; generating a trigger instruction based on the trigger event; determining, from the respective to-be-planned matters included in the respective travel task, a target matter corresponding to the trigger event; and planning the target matter based on the trigger instruction to obtain a planning result for the target matter, where a planning result for a last target matter in the at least one to-be-planned matter included in each travel task is the planning result for the corresponding travel task.

In an embodiment, the planning module 153 is configured for determining, based on the trigger instruction, reference information corresponding to the target matter; planning the target matter based on the reference information corresponding to the target matter to obtain a preliminary planning result for the target matter; and determining the planning result for the target matter based on the preliminary planning result for the target matter.

In an embodiment, the planning module 153 is configured for determining, based on the trigger instruction, a target capability required for planning the target matter; determining, based on the target capability, a target application for planning the target matter; generating a call instruction based on the target application; and calling the target application based on the call instruction to obtain the planning result for the target matter.

For beneficial technical effects corresponding to the exemplary embodiment of this apparatus, refer to the corresponding beneficial technical effects of the exemplary method section described above, which are not repeated herein.

### Exemplary Electronic Device

FIG. 16 is a diagram illustrating a structure of an electronic device according to an embodiment of the present disclosure. The electronic device includes at least one processor 161 and a memory 162.

The processor 161 may be a CPU (Central Processing Unit) or another form of processing unit having a data processing capability and/or an instruction execution capability, and may control another component in the electronic device 160 to perform a desired function.

The memory 162 may include one or more computer program products. The computer program product may include various forms of computer readable storage media, such as a volatile memory and/or a non-volatile memory. The volatile memory may include, for example, a RAM (Random Access Memory) and/or a cache. The non-volatile memory may include, for example, a ROM, a hard disk, or a flash memory. The computer readable storage medium may store one or more computer program instructions. The processor 161 may run the one or more computer program instructions to implement the method for travel planning based on an intelligent driving system and/or other desired functions in the foregoing embodiments of the present disclosure.

In an example, the electronic device 160 may further include an input means 163 and an output means 164. The components are interconnected through a bus system and/or other forms of connection mechanisms (not shown).

The input means 163 may further include, for example, a keyboard or a mouse.

The output means 164 may output various information to the outside, and may include, for example, a display, a loudspeaker, a printer, and a communication network and a remote output device connected thereto.

Certainly, for simplicity, only some components in the electronic device 160 that are related to the present disclosure are shown in FIG. 16, and components such as a bus and an input/output interface are omitted. Besides, the electronic device 160 may further include any other appropriate components depending on specific applications.

### Exemplary Computer Program Product And Computer Readable Storage Medium

In addition to the foregoing method and device, the embodiments of the present disclosure may also provide a computer program product including computer program instructions that, when run by a processor, cause the processor to perform the steps of the method for travel planning based on an intelligent driving system according to the embodiments of the present disclosure that is described in the "Exemplary Method" section.

The computer program product may be program code, written with one or any combination of a plurality of programming languages, which is configured for performing the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of the present disclosure may further relate to a computer readable storage medium, on which computer program instructions are stored. The computer program instructions, when run by a processor, cause the processor to perform the steps of the method for travel planning based on an intelligent driving system according to the embodiments of the present disclosure that is described in the "Exemplary Method" section.

The computer readable storage medium may be one readable medium or any combination of a plurality of readable media. The readable medium may be a readable signal medium or a readable storage medium. The readable storage medium includes, for example, but is not limited to electrical, magnetic, optical, electromagnetic, infrared, or semiconductor systems, apparatuses, or devices, or any combination of the above. More specific examples (a non-exhaustive list) of the readable storage medium include: an electrical connection with one or more conducting wires, a portable disk, a hard disk, a RAM, a ROM, an erasable programmable ROM (an EPROM or a flash memory), an optical fiber, a portable compact disk ROM (CD-ROM), an optical storage device, a magnetic storage device, or any suitable combination of the above.

Basic principles of the present disclosure are described above in combination with specific embodiments. However, the advantages, superiorities, effects, and the like mentioned in the present disclosure are merely examples rather than limitations, and it should not be considered that these advantages, superiorities, effects, and the like are necessary for each of the embodiment of the present disclosure. In addition, specific details disclosed above are merely for examples and for ease of understanding, rather than limitations. The details described above do not limit that the present disclosure must be implemented by using the foregoing specific details.

A person skilled in the art may make various modifications and variations to the present disclosure without departing from the spirit and scope of this application. The present disclosure is intended to cover these modifications and variations provided that they fall within the scope of protection defined by the claims of the present disclosure or equivalents thereof.

## Claims

1. A method for travel planning based on an intelligent driving system, **characterized by** comprising:
acquiring (100) a first speech of a user;
determining (200), based on the first speech, at least one travel requirement of the user for a current travel;
determining (300) at least one travel task to be planned for the current travel based on the at least one travel requirement;
determining (400) at least one to-be-planned matter included in the travel task; and
planning (500) the at least one to-be-planned matter included in the travel task to obtain a planning result for the corresponding travel task.

2. The method for travel planning based on an intelligent driving system according to claim 1, wherein the determining (200), based on the first speech, at least one travel requirement of the user for a current travel comprises:
converting (210) the first speech to first text; and
performing (220) semantic analysis on the first text to obtain at least one semantic result, wherein the semantic result corresponds to a respective one of the least one travel requirement.

3. The method for travel planning based on an intelligent driving system according to claim 1 or 2, wherein the determining (300) at least one travel task to be planned for the current travel based on the at least one travel requirement comprises:
determining (310) a first task of the at least one travel task based on the at least one travel requirement;
determining (320) a travel purpose of the current travel based on the at least one travel requirement; and
determining (330) a second task of the at least one travel task based on the travel purpose.

4. The method for travel planning based on an intelligent driving system according to any one of claims 1 to 3, wherein the determining (400) at least one to-be-planned matter included in the travel task comprises:
determining (410) a travel purpose of the current travel based on the at least one travel requirement;
determining (420) a task category of the travel task; and
determining (430), based on a first correspondence between a task category and a matter and a second correspondence between a travel purpose and a matter, at least one to-be-planned matter included in the travel task.

5. The method for travel planning based on an intelligent driving system according to any one of claims 1 to 4, wherein the planning (500) the at least one to-be-planned matter included in the travel task to obtain a planning result for the corresponding travel task comprises:
monitoring (510) a trigger event for the to-be-planned matter included in the respective travel task;
generating (520) a trigger instruction based on the trigger event;
determining (530), from the respective to-be-planned matters included in the respective travel task, a target matter corresponding to the trigger event; and
planning (540) the target matter based on the trigger instruction to obtain a planning result for the target matter,
wherein a planning result for a last target matter in the at least one to-be-planned matter included in the travel task is the planning result for the corresponding travel task.

6. The method for travel planning based on an intelligent driving system according to claim 5, wherein the planning (540) the target matter based on the trigger instruction to obtain a planning result for the target matter comprises:
determining (541), based on the trigger instruction, reference information corresponding to the target matter;
planning (542) the target matter based on the reference information corresponding to the target matter to obtain a preliminary planning result for the target matter; and
determining (543) the planning result for the target matter based on the preliminary planning result for the target matter.

7. The method for travel planning based on an intelligent driving system according to claim 5 or 6, wherein the planning (540) the target matter based on the trigger instruction to obtain a planning result for the target matter comprises:
determining (544), based on the trigger instruction, a target capability required for planning the target matter;
determining (545), based on the target capability, a target application for planning the target matter;
generating (546) a call instruction based on the target application; and
calling (547) the target application based on the call instruction to obtain the planning result for the target matter.

8. An apparatus for travel planning based on an intelligent driving system, **characterized by** comprising:
an interaction module (151), configured for acquiring a first speech of a user;
a policy module (152), configured for determining, based on the first speech, at least one travel requirement of the user for a current travel,
the policy module (152) being further configured for determining at least one travel task to be planned for the current travel based on the at least one travel requirement, and
the policy module (152) being further configured for determining at least one to-be-planned matter included in the travel task; and
a planning module (153), configured for planning the at least one to-be-planned matter included in the travel task to obtain a planning result for the corresponding travel task.

9. The apparatus for travel planning based on an intelligent driving system according to claim 8, wherein the policy module (152) is configured for determining, based on the first speech, at least one travel requirement of the user for a current travel by:
converting the first speech to first text; and
performing semantic analysis on the first text to obtain at least one semantic result, wherein the semantic result corresponds to a respective one of the least one travel requirement.

10. The apparatus for travel planning based on an intelligent driving system according to claim 8 or 9, wherein the policy module (152) is further configured for determining at least one travel task to be planned for the current travel based on the at least one travel requirement by:
determining a first task of the at least one travel task based on the at least one travel requirement;
determining a travel purpose of the current travel based on the at least one travel requirement; and
determining a second task of the at least one travel task based on the travel purpose.

11. The apparatus for travel planning based on an intelligent driving system according to any one of claims 8 to 10, wherein the policy module (152) is further configured for determining at least one to-be-planned matter included in the travel task by:
determining a travel purpose of the current travel based on the at least one travel requirement;
determining a task category of the travel task; and
determining, based on a first correspondence between a task category and a matter and a second correspondence between a travel purpose and a matter, at least one to-be-planned matter included in the travel task.

12. The apparatus for travel planning based on an intelligent driving system according to any one of claims 8 to 11, wherein the planning module (153) is configured for planning the at least one to-be-planned matter included in the travel task to obtain a planning result for the corresponding travel task by:
monitoring a trigger event for the to-be-planned matter included in the respective travel task;
generating a trigger instruction based on the trigger event;
determining, from the respective to-be-planned matters included in the respective travel task, a target matter corresponding to the trigger event; and
planning the target matter based on the trigger instruction to obtain a planning result for the target matter,
wherein a planning result for a last target matter in the at least one to-be-planned matter included in the travel task is the planning result for the corresponding travel task.

13. The apparatus for travel planning based on an intelligent driving system according to claim 12, wherein the planning module (153) is configured for planning the target matter based on the trigger instruction to obtain a planning result for the target matter by:
determining, based on the trigger instruction, reference information corresponding to the target matter;
planning the target matter based on the reference information corresponding to the target matter to obtain a preliminary planning result for the target matter; and
determining the planning result for the target matter based on the preliminary planning result for the target matter.

14. Anon-transitory computer readable storage medium, on which a computer program is stored, **characterized by** that the computer program, when executed by a processor (161), causes the processor (161) to implement the method for travel planning based on an intelligent driving system according to any one of claims 1 to 7.

15. An electronic device (160), **characterized by** comprising:
a processor (161); and
a memory (162), configured for storing instructions executable by the processor (161), wherein
the processor (161) is configured for reading the executable instructions from the memory (162), and executing the executable instructions to implement the method for travel planning based on an intelligent driving system according to any one of claims 1 to 7.
